## Europäisches Patentamt
## European Patent Office
## Office européen des brevets

(11) Numéro de publication: **0 179 055**
**B1**

(12) # FASCICULE DE BREVET EUROPEEN

(45) Date de publication du fascicule du brevet:
**30.03.88**

(51) Int. Cl.⁴: **C 25 C 3/14,** B 65 G 53/20

(21) Numéro de dépôt: **84901771.0**

(22) Date de dépôt: **20.04.84**

(86) Numéro de dépôt international:
**PCT/FR 84/00112**

(87) Numéro de publication internationale:
**WO 85/04676 (24.10.85** Gazette 85/23)

(54) **DISPOSITIF CLOS A FLUIDISATION POTENTIELLE POUR LE CONVOYAGE HORIZONTAL EN LIT DENSE DE MATERIAUX PULVERULENTS.**

(30) Priorité: **12.04.84 FR 8406017**

(73) Titulaire: **ALUMINIUM PECHINEY, 23, rue Balzac, F-75008 Paris Cédex 08 (FR)**

(43) Date de publication de la demande:
**30.04.86 Bulletin 86/18**

(72) Inventeur: **HANROT, Jean-Pascal, 7, La Clairnaude La Mère de Dieu Brûlée, F-13100 Aix-en-Provence (FR)**
Inventeur: **VOLPELIERE, Jacky, Allée des Genêts Quartier Gassin, Mimet F-13120 Gardanne (FR)**

(45) Mention de la délivrance du brevet:
**30.03.88 Bulletin 88/13**

(74) Mandataire: **Vanlaer, Marcel et al, PECHINEY 28, rue de Bonnel, F-69433 Lyon Cédex 3 (FR)**

(84) Etats contractants désignés:
**CH DE GB LI NL SE**

(56) Documents cités:
**EP - A - 0 026 735**
**EP - A - 0 122 925**

**Materials Handling News, No. 257 (oct. 1978), Pneumatic Handling, page 97**

## Description

L'invention relative à un perfectionnement de l'invention décrite dans la demande de brevet EP-A-122 925 concerne un aménagement de dispositifs clos à fluidisation potentielle de convoyage en lit dense, généralement horizontal, de matériaux possédant les caractéristiques de pulvérulents fluidisables, depuis une zone de stockage, jusqu'à au moins une zone à alimenter, éloignées l'une de l'autre, dans le cas particulier où la zone à alimenter est un récipient clos appelé «capacité-réserve», muni seulement d'une entrée et d'une sortie de matériaux pulvérulents.

L'invention concerne plus particulièrement l'aménagement d'un dispositif clos de transport d'alumine comportant des convoyeurs généralement horizontaux placés entre un réservoir de stockage aérien de grande contenance et des vases clos appelés «capacité-réserve», munis chacun d'une entrée et d'une sortie d'alumine, chaque capacité-réserve alimentant au moins une partie d'une cuve d'électrolyse ignée de l'alumine.

Par matériaux fluidisables, on entend définir tous les matériaux bien connus de l'homme de l'art se présentant sous une forme pulvérulente, et de granulométrie et de cohésion telles que la vitesse de passage de l'air insufflé provoque, à vitesse faible, la décohésion des particules entre elles et la réduction des forces de frottement interne. De tels matériaux sont par exemple, l'alumine destinée à l'électrolyse ignée, les ciments, plâtres, la chaux vive ou éteinte, cendres volantes, fluorure de calcium, charge d'apport pour caoutchouc, fécule, catalyseurs, poussières de charbon, sulfate de sodium, phosphates, polyphosphates, pyrophosphates, les matériaux plastiques sous la forme de poudre, les produits alimentaires tels que le lait en poudre, les farines, etc....

Il est bien connu que des technologies ont été étudiées et développées, par exemple les aéroglissières, pour le transport en lit fluidisé et non pas en lit dense, de matériaux pulvérulents. Un exemple parmi d'autres est celui concernant l'alimentation en alumine de cellules d'électrolyse ignée pour la production de l'aluminium.

Pour ce faire, l'alumine, produit pulvérulent transporté et solubilisé dans le bain électrolytique, est progressivement consommée pendant que se déroule l'électrolyse et doit être remplacée au fur et à mesure de sa consommation, de telle manière que la concentration en alumine solubilisée soit maintenue dans les limites favorables pour le fonctionnement de la cellule à plein rendement. Dès lors, il devient nécessaire de régler la quantité d'alumine introduite dans la cuve d'électrolyse, de telle manière que son fonctionnement ne soit pas perturbé par un excès ou par un manque d'alumine.

De nombreux dispositifs ont été proposés par l'homme de l'art et décrits dans la littérature spécialisées, qui sont destinés à permettre une alimentation régulière de la cuve d'electrolyse en alumine. Un premier dispositif, décrit dans le brevet FR-A-2 099 434, permet d'alimenter en alumine une cellule d'électrolyse et comprend un réservoir de stockage de l'alumine, au-dessous duquel se trouve un appareil de mesure permettant de régler la quantité d'alumine sortant du réservoir et, enfin, un moyen de transport fluidisé de l'alumine, encore connu sous l'appellation d'aéroglissière, placé entre l'appareil de mesure et la cellule à alimenter, le réservoir d'alumine et l'appareil de mesure étant placés, latéralement, à côté de la cellule. Le moyen de transport est lui-même muni de tuyauteries de sorties permettant d'alimenter la cellule en plusieurs points par l'intermédiaire de tubes plongeurs animés d'un mouvement de «monte et baisse», débitant chacun sensiblement la même quantité d'alumine.

Mais, un tel dispositif présente des inconvénients majeurs pour son exploitation industrielle . En effet, un tel dispositif est conçu d'une manière telle qu'il ne peut alimenter qu'une seule cuve d'électrolyse, alors qu'il est nécessaire d'alimenter une série de cuves d'électrolyse comportant par exemple 60 unités. En outre, ce dispositif est muni d'un réservoir en alumine éloigné de l'unique cuve qu'il peut alimenter et, dès lors, crée un temps de réponse important entre la sollicitation en matériaux pulvérulents et l'alimentation de la cuve d'électrolyse avec ledit matériau. De plus, ce dispositif est muni de plusieurs points d'introduction du matériau pulvérulent dans la cuve d'électrolyse, qui ne garantissent pas l'égalité de la quantité de matériau pulvérulent, introduite en chaque point.

En plus des inconvénients précités, comme l'appareil de mesure est placé en amont de l'aéroglissière, le pulvérulent à transporter est totalement fluidisé et il se crée alors, entre la surface supérieure du lit fluidisé en mouvement et le plafond de l'aéroglissière, une couche gazeuse circulant à haute vitesse, entraînant avec elle les particules les plus fines du pulvérulent transporté. En outre, comme l'aéroglissière est démunie de moyen d'évacuation de la phase gazeuse, la totalité de l'air de fluidisation est introduite dans la cuve d'électrolyse, simultanément avec l'alumine, accroissant ainsi les envolements de particules les plus fines au niveau de la cuve d'électrolyse.

Or, ce problème auquel se heurte l'homme de l'art est celui du transport à longue distance d'un matériau pulvérulent, emmagasiné dans un silo de très grande capacité en vue d'alimenter des ateliers de conditionnements se trouvant éloignés de plusieurs centaines de mètres dudit silo, problème qu'il a résolu jusqu'à présent par l'usage, par exemple, de conteneurs mobiles, de transport pneumatique à haute pression ou de transporteur mécanique.

Plus récemment, un autre dispositif d'alimentation en alumine d'une cellule d'électrolyse en de multiples points, a été décrit dans le brevet US 4 016 053. Ce dispositif, qui permet de transporter un matériau pulvérulent d'une manière permanente d'une zone de stockage à une zone de consommation, comprend tout d'abord un convoyeur primaire à lit fluidisé, muni des moyens d'alimentation et d'évacuation du gaz utilisé pour fluidiser et transporter les matériaux pulvérulents provenant de la zone de stockage et à maintenir le convoyeur primaire essentiellement plein de matériaux fluidisés, puis comprend une pluralité de convoyeurs d'alimentation et d'évacuation du gaz utilisé pour fluidiser et transporter les matériaux pulvérulents provenant du convoyeur primaire et maintenir les convoyeurs secondaires continuellement pleins de matériaux pulvérulents fluidisés, enfin, comprend des dispositifs d'alimentation discontinue en matériaux pulvérulents de chaque cuve d'électrolyse par gravité, chaque dispositif étant alimenté par l'intermédiaire de l'un des convoyeurs secondaires à lit fluidisé.

Or, et cela est un inconvénient majeur, le dispositif décrit dans le brevet US 4 016 053 doit maintenir le matériaux pulvérulent en état de fluidisation permanent, que la cellule d'électrolyse ait nécessité d'être alimentée ou non et, de ce fait, consomme des quantités importantes de gaz de fluidisation et, corrélativement, d'énergie. De plus, et cela est un autre inconvénient majeur, pour que les matériaux pulvérulents présents dans ce dispositif restent dans un état permanent de fluidisation, il existe, entre la face supérieure du lit fluidisé et le plafond de l'aéroglissière, une veine gazeuse qui se déplace à grande vitesse et d'une manière permanente vers des tubulures (40) d'évacuation situées à la partie supérieure de trémies d'alimentation des cellules d'électrolyse. Ces tubulures sont destinées à canaliser vers un dispositif de piégeage et récupération de poussières, le gaz de fluidisation chargé de poussière d'alumine entraînée. Il est indiqué, par ailleurs, que le gaz de fluidisation peut entraîner jusqu'à 10% en poids du matériau pulvérulent présent dans l'aéroglissière.

Enfin, dans la revue américaine «Materials Handling News n° 257 d'octobre 1978 - p. 97», est décrit un dispositif combinant la gravité et la fluidisation en lit dense de matériaux pulvérulents permettant de limiter notablement les pertes de matière par entraînement aux évents, tout en assurant le transport et le déchargement en continu ou en discontinu d'un matériaux pulvérulent en plusieurs points simultanément. Dans sa version la plus élaborée (fig. 6 choke-fed-air-activated gravity conveyor), le dispositif est un conveyour clos et incliné dont le canal supérieur de circulation du matériau pulvérulent fluidisé, équipé d'une mise à l'air dont l'ouverture est reglée par une valve, est complètement rempli par le matériau fluidisé en phase dense alors que le canal de circulation du gaz de fluidisation en-dessous de la paroi poreuse est fractionné en plusieurs compartiments dans lesquels le débit est réglé par des valves. Le transport du matériau s'y fait aussi par gravité en inclinant le convoyeur pour mettre le produit en mouvement.

Ainsi, les dispositifs décrits dans l'art antérieur ne peuvent pleinement satisfaire l'utilisateur car ils se révèlent d'application industrielle complexe et onéreuse par les consommations d'énergie qu'ils exigent, par exemple dans le cas des dispositifs à chargement-déchargement, des systèmes à transport pneumatique, ou encore par les pertes de matériaux pulvérulents qu'ils provoquent, ou par la mise en œuvre de moyens mécaniques auxiliaires importants: valves pilotées, chariots, engins, ponts roulants, trémies mobiles etc.

C'est pourquoi la demanderesse, poursuivant ses recherches en ce domaine, a mis au point un dispositif de transport en lit dense de matériaux pulvérulents, exempt des inconvénients précités, qu'elle a décrit dans la demande de brevet EP-A-1 229 925 appartenant à l'état de la technique défini à l'article 54 (3) et (4), sous l'appellation de dispositif clos, à fluidisation potentielle, pour le convoyage de matériaux pulvérulents depuis une zone de stockage jusqu'à au moins une zone à alimenter. Ce dispositif à lit dense, qui comprend entre les deux zones de stockage et à alimenter, au moins un convoyeur horizontal, muni de moyens de fluidisation, constitué par un canal inférieur à circulation de gaz, un canal supérieur à circulation du matériau pulvérulent et du gaz, entre lesquels est placée une paroi poreuse, au moins une tubulure d'alimentation en gaz du canal inférieur, se caractérise en ce que, dans le but de fluidiser potentiellement le matériau pulvérulent remplissant complètement le convoyeur, et créer le lit dense, ce convoyeur est muni d'au moins une colonne d'équilibrage dont la hauteur de remplissage équilibre la pression du gaz de fluidisation potentielle.

Pour bien comprendre la fluidisation potentielle apparaissant dans le cadre de la demande de brevet EP-A-122 925, il est utile de rappeler ce qu'est la fluidisation, habituellement pratiquée dans l'art antérieur pour le convoyage de matérieux pulvérulents.

Dans le cas de la fluidisation telle qu'elle est pratiquée dans l'art antérieure, comme il peut apparaître, par exemple, dans le brevet US 4 016 053 précité, le gaz de fluidisation est introduit sous une pression donnée Pf au-dessous de la paroi poreuse de fluidisation séparant le canal inférieur à circulation de gaz et le canal supérieur à circulation du matériau pulvérulent d'un convoyeur horizontal. Le gaz de fluidisation traverse ladite paroi poreuse, puis passe entre les particules au repos du matériau pulvérulent formant la couche à fluidiser. L'épaisseur de ladite couche au repos est très inférieure à la hauteur du canal supérieur dudit convoyeur, c'est-à-dire qu'en l'absence de toute injection de gaz de fluidisation, le matériau pulvérulent ne remplit que très partiellement le convoyeur horizontal.

Dès lors que la circulation du gaz dans l'espace interstitiel existant entre les particules est suffisamment élevée, lesdites particules sont mobilisées puis soulevées, chacune d'entre elles perdant les points de contact permanent avec ses voisines. Par ce moyen, les frottements internes entre particules sont réduits et ces particules sont mises dans un état de suspension dynamique. Dès lors, chaque particule sollicitée est soumise à une force ascensionnelle due à la vitesse du gaz en contact avec ladite particule, vitesse qui est de l'ordre de celle de la chute dans l'air de cette particule.

De ce fait, il en résulte une augmentation du volume initial du matériau pulvérulent et, corrélativement, une diminution de la densité apparente, puisque se forme une suspension d'une phase solide dans une phase gazeuse.

Dans le cas de la fluidisation potentielle d'un lit dense, telle qu'elle est pratiquée dans la demande de brevet EP-A-122 925, le matériau pulvérulent, en dehors de toute injection de gaz, rempli quasi complètement le dispositif de convoyage, en particulier le canal supérieur de circulation du matériau pulvérulent de convoyeur horizontal. Les particules au repos du matériau pulvérulent forment une couche dudit matériau à transporter dont l'épaisseur est pratiquement égale à la hauteur dudit canal supérieur. Dès lors que le gaz est introduit au-dessous de la paroi poreuse, qui sépare le canal inférieur à circulation de gaz, du canal supérieur à circulation du matériau pulvérulent, et ce, sous la même pression Pf que celle qui serait pratiquée dans l'art antérieur pour fluidiser le matériau pulvérulent, la colonne d'équilibrage est remplie de ce même matériau selon une hauteur manométrique qui équilibre la pression Pf et interdit l'accroissement des interstices entre les particules.

De ce fait, la présence de la colonne d'équilibrage interdit la fluidisation du matériau pulvérulent présent dans le convoyeur horizontal et oblige ledit matériau à se présenter sous l'aspect d'un lit dense à fluidisation potentielle, comme la demanderesse a pu le constater lors de ses nombreuses expérimentations. En outre, comme la distance interstitielle entre les particules n'augmente pas, la perméabilité du milieu au gaz introduit sous la pression Pf est très faible et limite l'écoulement gazeux à une très petite valeur, par la section de la colonne d'équilibrage. Ainsi, et pour illustrer le phénomène observé par la demanderesse, le matériau pulvérulent à transporter, par exemple de l'alumine, étant soumis à une pression de fluidisation Pf de 80 millibars, dans le cas de l'art antérieur tel qu'il peut apparaître par exemple dans US 4 016 053, le débit de gaz en circulation correspondant à ladite pression Pf et provoquant la fluidisation du matérieu pulvérulent est de l'ordre de $33 \cdot 10^{-3}$ m$^3 \cdot$ m$^{-2} \cdot$ s$^{-1}$, alors que, dans le cas de l'invention et pour la même pression Pf, le débit de gaz en circulation est seulement de l'ordre de $4 \cdot 10^{-3} \cdot$ m$^3 \cdot$ m$^{-2} \cdot$ s$^{-1}$, débit trop faible pour pouvoir provoquer la fluidisation de l'alumine dans l'ensemble du convoyeur.

Le dispositif clos à fluidisation potentielle de convoyage en lit dense de matériaux pulvérulents, tel qu'il est décrit dans la demande de brevet EP-A-122 925, muni d'au moins une colonne d'équilibrage, assure le transfert dudit matériau pulvérulent d'une zone de stockage vers une zone de consommation.

Cette zone de consommation comporte un dispositif de stockage du matériau pulvérulent, appelé «capacité-réserve» muni de moyens d'introduction ou de prélèvement du matériau pulvérulent à consommer, ladite «capacité-réserve» étant ouverte à l'atmosphère de la zone de consommation.

Mais, il peut être nécessaire que la «capacité-réserve» soit close, afin de soustraire le matériau pulvérulent présent à l'atmosphère de la zone de consommation quand cette atmosphère peut devenir polluante, agressive, ou gênante pour ledit matériau ou encore quand ledit matériau peut polluer l'environnement. Le dispositif selon l'invention apporte alors une solution simple à ce problème de transfert et d'utilisation de matériaux pulvérulents dans des atmosphères bien spécifiques, tout en conservant les avantages économiques des dispositifs à fluidisation potentielle des matériaux pulvérulents en lit dense.

Plus précisément le dispositif clos à fluidisation potentielle selon l'invention pour le convoyage en lit dense de matériaux pulvérulents, depuis une zone de stockage jusqu'à au moins une zone à alimenter constituée par un dispositif de stockage du matériau pulvérulent, qui comprend entre ces 2 zones au moins un convoyeur muni de moyen de fluidisation constitués par un canal inférieur de circulation de gaz, un canal supérieur à circulation du matériau pulvérulent et du gaz, une paroi poreuse séparant lesdits canaux sur toute leur longueur, et au moins une tubulure d'alimentation en gaz du canal inférieur permettant d'établir une pression Pf, le matériau pulvérulent remplissant complètement le canal supérieur du convoyeur et le canal supérieur étant muni d'au moins une colonne, dite d'équilibrage, dont le rapport de la surface minimale «σ» de la section droite à la surface totale S de la paroi poreuse est au moins égal à 1/200 caractérisé en ce que la ou les colonnes d'équilibrage communique(nt) librement et directement avec l'atmosphère, en ce que le canal inférieur de circulation de gaz est susceptible d'être alimenté sur toute sa longueur en gaz sous pression Pf et en ce que le dispositif clos de stockage du matériau pulvérulent dans la zone à alimenter appelé encore «capacité réserve», muni de moyens d'introduction et de prélèvement du matériau pulvérulent, est également muni d'au moins une tubulure située au-dessus du niveau extrême de remplissage en matériau pulvérulent, dans le but d'établir un équilibre des pressions entre l'intérieur et l'extérieur de ladite capacité réserve.

La tubulure de la capacité réserve peut communiquer directement avec l'atmosphère ou être reliée à une atmosphère artificielle ou protégée, par exemple à des réseaux de collecte de gaz poussiéreux, à des réseaux de dégazage...

Comme la demanderesse l'a décrit dans la demande de brevet EP-A-122 925, la colonne d'équilibrage est préférentiellement verticale. Elle peut être montée dans l'axe du convoyeur, ou placée latéralement et raccordée à la partie supérieure dudit convoyeur par tout moyen approprié. La colonne d'équilibrage est généralement tubulaire et sa section par un plan perpendiculaire à son axe peut être circulaire, elliptique ou polygonale.

En multipliant ses recherches et en conduisant ses expérimentations pour mettre au point le dispositif, tel que décrit dans la demande de brevet EP-A-122 925, la demanderesse a été amenée à constater et à établir que les divers paramètres techniques de la colonne d'équilibrage, ainsi que les nombreux paramètres attachés au matériau pulvérulent à transporter, étaient associés dans des relations permettant de définir la surface minimale ou totale que doit avoir la ou les sections droites des colonnes, déterminée en proportion de la surface totale de la paroi poreuse: S. C'est ainsi que, pour un dispositif à fluidisation potentielle de transport de matériau pulvérulent selon l'intention, comportant une zone de stockage, au moins un convoyeur clos horizontal et au moins une colonne d'équilibrage dudit convoyeur, pour une pression de gaz de fluidisation Pf et une surface totale S de la paroi poreuse, la surface minimale totale «σ» de la section droite de la ou des colonnes d'équilibrage doit répondre à la relation:

$$\sigma \leqslant \frac{S}{200}$$

Préférentiellement, la surface minimale totale «σ» est choisie dans les limites suivantes, qui ont été déteminées expérimentalement:

$$\frac{S}{200} \leqslant \sigma \leqslant \frac{S}{20}$$

Dans le cas particulier de l'alumine, la demanderesse a été amenée à constater expérimentalement que la surface minimale totale σ, que doit avoir la section droite de la ou des colonnes d'équilibrage, doit être au moins égale à $\frac{S}{100}$ et, de préférence, comprise entre $\frac{S}{100}$ et $\frac{S}{50}$. La hauteur de la colonne d'équilibrage doit être au moins égale à la valeur extraite de la relation d'équilibre:

$$Pf = H \cdot \rho$$

dans laquelle ρ est le poids spécifique du matériau pulvérulent présent dans ladite colonne, tandis que Pf est la pression de gaz de fluidisation.

D'une manière générale, le dispositif à fluidisation potentielle de convoyage en lit dense décrit dans la demande principale de brevet EP-A-122 925 est muni d'une seule colonne d'équilibrage. Mais il peut être intéressant de le munir d'au moins deux colonnes d'équilibrage, en particulier quand les installations de convoyage en lit dense sont très longues.

La colonne d'équilibrage selon la demande de brevet EP-A-122 925 s'applique avec succès à au moins un convoyeur à lit dense mais peut aussi appartenir à un ensemble de convoyeurs à lit dense, c'est-à-dire à fluidisation potentielle, montés en cascade, quel que soit le nombre d'étages, le premier étage recevant le matériau pulvérulent de la zone de stockage, le dernier étage alimentant la zone de consommation par l'intermédiaire de la «capacité-réserve».

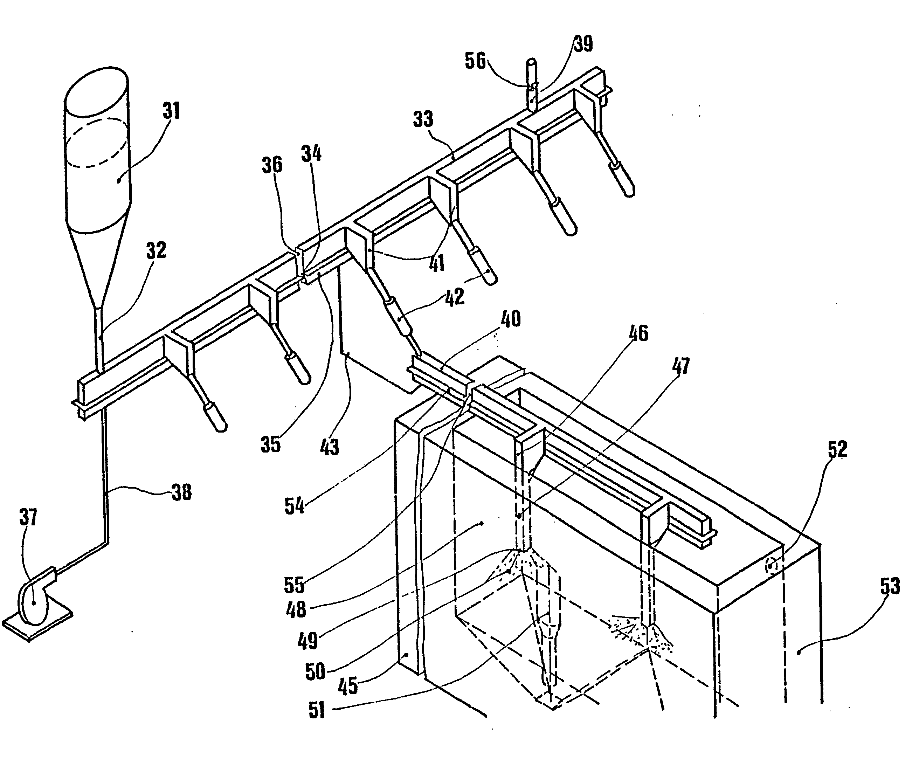

L'invention sera mieux comprise grâce à la description non limitative de la figure 1, illustrant un mode de fonctionnement et une application industrielle du dispositif.

Cette figure est une vue en perspective, avec des zones d'observation partiellement déchiquetées, d'une installation complète de convoyage en lit dense, selon le dispositif de l'invention.

La figure 1 représente une installation d'alimentation en alumine d'une série de cellules électrolytiques de production de l'aluminium. Dans une cellule d'électrolyse ignée de l'alumine, il est nécessaire d'alimenter régulièrement le bain fondu en alumine au fur et à mesure de la consommation dans le temps par une zone de stockage placée au-dessus de chaque cellule qui alimente le bain à partir de plusieurs points.

Le dispositif clos à fluidisation potentielle, selon l'invention, de convoyage en lit dense de l'alumine d'une zone de stockage à au moins une zone de consommation, comporte les moyens décrits ci-après:

Un réservoir aérien (31) d'alumine de plus ou moins grande capacité selon les besoins, éloigné de l'atelier d'électrolyse, est placé en un point du site industriel facilement accessible pour en permettre son alimentation en alumine pour conteneur routier ou ferroviaire ou par le dispositif de traitement des gaz fluorés venant de l'électrolyse. Ce réservoir aérien (31), généralement à la pression atmosphérique, qui est relié par gravité à un convoyeur primaire (33) dont la longueur est équivalente à celle de la partie de l'atelier d'électrolyse à alimenter, se compose d'une paroi poreuse (34), d'une surface totale $S_1$ séparant un canal inférieur à circulation de gaz (35) et un canal supérieur (36) à circulation du matériau pulvérulent. Le canal inférieur (35) à circulation de gaz est alimenté par l'intermédiaire du ventilateur (37) et de la canalisation (38). Le canal supérieur (36) est muni d'une colonne d'équilibrage (39) dont la surface minimale totale σ1 de la section doit être au moins égale à $S_1/100$ en créant un lit dense à fluidisation potentielle. Ce convoyeur primaire (33) est relié à des convoyeurs secondaires (40) également à fluidisation potentielle de convoyage en lit dense, grâce aux piquages latéraux (41) et aux canalisations (42) inclinées. Les convoyeurs secondaires à lit dense (40) à fluidisation potentielle sont du même type que le convoyeur primaire (33) à fluidisation potentielle. Ils sont alimentés en gaz par les canalisations (43) reliant le canal inférieur (35) à circulation de gaz du convoyeur primaire (33), aux canaux inférieurs à circulation de gaz des convoyeurs secondaires à lit dense (40) à fluidisation potentielle. Chaque convoyeur secondaire à lit dense (40) s'étend longitudinalement au-dessus d'une cuve d'électrolyse, schématisée par (45). Des piquages latéraux (46) alimentent en alumine des tubes plongeurs (47) qui déversent le matériau pulvérulent dans des réservoirs de stockage clos (48) placés au-dessus de chaque cuve d'électrolyse, formant ainsi un volume pyramidal (50) de matériau pulvérulent. Ces réservoirs de stockage (48) sont munis de moyens de prélèvement (51) du matériau pulvérulent, commandés par l'automatisme de contrôle de la cellule d'électrolyse. De même, l'extrémité (49) des tubes plongeurs peut être munie de moyen d'obturation asservi à l'alimentation de la cuve d'électrolyse, ou encore peut être obturée par l'augmentation du niveau d'alumine dans le réservoir (48).

Enfin, la paroi (53) des réservoirs de stockage (48) encore appelés «capacité-réserve», est munie d'une tubulure (52) permettant d'établir un équilibre des pressions entre l'intérieur et l'extérieur de la «capacité-réserve».

Comme cela a été exprimé dans la demande de brevet EP-A-122 925 les mouvements de fluides gazeux et matériaux pulvérulents selon l'invention sont remarquables par les différences fondamentales qu'ils révèlent en comparaison avec les procédés antérieurs de convoyage de matériaux pulvérulents en lit fluidisé.

Selon le dispositif clos à fluidisation potentielle de convoyage en lit dense, le matériau pulvérulent occupe, en vrac, l'ensemble du dispositif de convoyage, selon l'invention, exprimant ainsi que le poids spécifique apparent du matériau pulvérulent remplissant le dispositif dans les zones 31, 32, 36, 39, 42, 40, 46 et 47 est très proche de celui dudit matériau stocké en tas à la pression atmosphérique. Le niveau supérieur du matériau pulvérulent présent dans le réservoir (31) doit toujours être au-dessus du niveau supérieur atteint par le matériau pulvérulent dans la colonne d'équilibrage (39) quand le dispositif est soumis à une pression de gaz Pf en (35) et (54). Dès lors que l'on applique, par lintermédiaire des canalisations (38) et (43), une pression de gaz Pf préalablement calculée en fonction de la géométrie de l'installation, au-dessous des parois poreuses (34) et (35), pression du même ordre de grandeur que celle que l'on appliquerait dans une aéroglissière à lit fluidisé, le matériau pulvérulent à transporter occupe la colonne d'équilibrage (39) jusqu'au niveau (56) selon une hauteur manométrique qui équilibre la pression de gaz Pf. Comme le réservoir de stockage (31) est suffisamment rempli du matériau pulvérulent à transporter, la sortie (49) du tube (47) est immergée dans la zone (50) du matériau pulvérulent. L'équilibre qui en résulte est maintenu dans l'état tant que la demande par la canalisation (51) du matériau à consommer ne provoque pas le dégagement de la sortie (49) par l'abaissement du niveau du matériau pulvérulent (50).

Au cours de la consommation du matériau pulvérulent stocké dans le réservoir (48), le niveau dudit matériau en tas (50) s'abaisse et finit par se situer au niveau de la sortie (49). Dès lors que cette sortie (49) est libérée, il se produit un échappement du matériau pulvérulent par le tube (47) et la sortie (49) grâce à la décompression du gaz inclus dans la zone (46) du convoyeur, la plus proche de la zone de consommation en aval de (51) (non représentée). Dès que la zone de consommation a reçu la quantité souhaitée de pulvérulent, la sortie (49) est à nouveau obturée en récréant les conditions d'équilibre. La zone (46) est alors réalimentée en pulvérulent par éboulement de proche en proche, de l'aval vers l'amont, jusqu'au silo (31).

Ainsi, il se produit une alimentation en cascade de matériau pulvérulent par un effet de vague ou éboulement, qui se produit en remontant depuis la zone de consommation illustrée par la «capacité-réserve» (48) jusqu'au réservoir de stockage (31) en passant par les moyens (47) (46) (40) (42) (41) (36) et (32), le matériau pulvérulent n'étant en aucun cas fluidisé dans l'ensemble du dispositif selon l'invention.

## Revendications

1. Dispositif clos, à fluidisation potentielle, pour le convoyage en lit dense de matériaux pulvérulents, depuis une zone de stockage (31) jusqu'à au moins une zone à alimenter (45), constituée par un dispositif de stockage (48) du matériau pulvérulent, qui comprend entre ces 2 zones au moins un convoyeur (33) muni de moyens de fluidisation constitués par un canal inférieur (35) de circulation de gaz, un canal supérieur (36) à circulation du matériau pulvérulent et du gaz, une paroi poreuse (34) séparant lesdits canaux sur toute leur longueur, et au moins une tubulure (38) d'alimentation en gaz du canal inférieur (35) permettant d'établir une pression Pf, le matériau pulvérulent remplissant complètement le canal supérieur (36) du convoyeur (33) et le canal supérieur (36) étant muni d'au moins une colonne (39), dite d'équilibrage, dont le rapport de la surface minimale «σ» de la section droite à la surface totale S de la paroi poreuse est au moins égal à 1/200, caractérisé en ce que: la ou les colonne(s) à equilibrage (39) communique(nt) librement et directement avec l'atmosphère, en ce que le canal inférieur de circulation de gaz (35) est susceptible d'être alimenté sur toute sa longueur en gaz sous pression Pf, et en ce que le dispositif clos de stockage (48) ou «capacité réserve», muni de moyens d'introduction (47) et de prélèvement (51) du matériau pulvérulent, est également muni d'au moins une tubulure (52) située au-dessus du niveau extrême de remplissage en matériau pulvérulent, dans le but d'établir un équilibre de pression entre l'intérieur et l'extérieur de ladite capacité réserve.

2. Dispositif clos, à fluidisation potentielle, de convoyage en lit dense de matériaux pulvérulents selon la revendication 1, caractérisé en ce que la tubulure (52) du dispositif clos de stockage ou capacité réserve (48) communique librement avec l'atmosphère.

3. Dispositif clos, à fluidisation potentielle de convoyage en lit dense de matériaux pulvérulents selon la revendication 1, caractérisé en ce que la tubulure (52) est réliée à une atmosphère protégée, par exemple à des réseaux de collecte de gaz poussiéreux, à des réseaux de dégazage.

4. Dispositif clos, à fluidisation potentielle de convoyage en lit dense de matériaux pulvérulents, selon revendication 1, caractérisé en ce que la colonne d'équilibrage (39) est montée verticalement dans l'axe du convoyeur.

5. Dispositif clos, à fluidisation potentielle de convoyage à lit dense de matériaux pulvérulents, selon revendication 1, caractérisé en ce que la colonne d'équilibrage (39) est placée latéralement au convoyeur et lui est raccordée à la partie supérieure par tout moyen approprié.

6. Dispositif clos, à fluidisation potentielle de convoyage en lit dense de matériaux pulvérulents, selon la revendication 1, caractérisé en ce que la surface minimale totale «σ» de la section de la ou des colonnes d'équilibrage (39) montées sur chaque convoyeur est choisie dans l'intervalle S/200 à S/20 où S est la surface totale de la paroi poreuse dudit convoyeur.

7. Dispositif clos, à fluidisation potentielle de convoyage en lit dense d'alumine pulvérulente, selon la revendication 1, caractérisé en ce que la surface minimale totale «σ» de la section droite de la ou des colonnes d'équilibrage (39) montées sur chaque convoyeur, est choisie dans l'intervalle S/100 à S/50, où S est la surface totale de la paroi poreuse dudit convoyeur.

## Patentansprüche

1. Geschlossene Vorrichtung mit potentieller Fluidisierung zum Fördern von pulverigen Materialien im dichten Bett von einer Speicherzone (31) bis zu wenigstens einer zu speisenden Zone (45), die aus einer Speichereinrichtung (48) des pulverigen Materials besteht, welche Vorrichtung zwischen diesen 2 Zonen wenigstens einen Förderer (33) aufweist, der mit Fluidisierungsmitteln ausgerüstet ist, die aus einem unteren Kanal (35) zur Gaszirkulation, einem oberen Kanal (36) zur Zirkulation des pulverigen Materials und des Gases, einer diese Kanäle über ihre ganze Länge trennenden porösen Wand (34) und wenigstens einem Rohr (38) zur Speisung des unteren Kanals (35) mit Gas bei Ermöglichung der Einstellung eines Drucks Pf bestehen, wobei das pulverige Material den oberen Kanal (36) des Förderers (33) völlig ausfüllt und der obere Kanal (36) mit wenigstens einer sogenannten Ausgleichssäule (39) ausgerüstet ist, deren Verhältnis der minimalen Oberfläche «σ» des Querschnitts zur gesamten Oberfläche S der porösen Wand wenigstens gleich 1/200 ist, dadurch gekennzeichnet, dass die Ausgleichssäule oder -säulen (39) frei und direkt mit der Atmosphäre in Verbindung stehen, dass der untere Gaszirkulationskanal (35) zur Speisung über seine ganze Länge mit Gas unter dem Druck Pf geeignet ist und dass die geschlossene Speichereinrichtung (48) oder «Reservekapazität», die mit Mitteln zur Einführung (47) und Entnahme (51) des pulverigen Materials ausgerüstet ist, ebenfalls mit wenigstens einem Rohr (52) ausgerüstet ist, das sich oberhalb des äussersten Füllungsniveau an pulverigem Material befindet, um ein Druckgleichgewicht zwischen dem Inneren und dem Äusseren der Reservekapazität einzustellen.

2. Geschlossene Vorrichtung mit potentieller Fluidisierung zum Fördern von pulverigen Materialien im dichten Bett nach dem Anspruch 1, dadurch gekennzeichnet, dass das Rohr (52) der geschlossenen Speichereinrichtung oder Reservekapazität (48) frei mit der Atmosphäre in Verbindung steht.

3. Geschlossene Vorrichtung mit potentieller Fluidisierung zum Fördern von pulverigen Materialien im dichten Bett nach dem Anspruch 1, dadurch gekennzeichnet, dass das Rohr (52) mit einer Schutzatmosphäre, z.B. mit Netzen zum Sammeln von staubigen Gasen, mit Entgasungsnetzen verbunden ist.

4. Geschlossene Vorrichtung mit potentieller Fluidisierung zum Fördern von pulverigen Materialien im dichten Bett nach dém Anspruch 1, dadurch gekennzeichnet, dass die Ausgleichssäule (39) vertikal in der Achse des Förderers montiert ist.

5. Geschlossene Vorrichtung mit potentieller Fluidisierung zum Fördern von pulverigen Materialien im dichten Bett nach dem Anspruch 1, dadurch gekennzeichnet, dass die Ausgleichssäule (39) seitlich am Förderer angeordnet ist und mit diesem am oberen Teil durch jedes geeignete Mittel verbunden ist.

6. Geschlossene Vorrichtung mit potentieller Fluidisierung zum Fördern von pulverigen Materialien im dichten Bett nach dem Anspruch 1, dadurch gekennzeichnet, dass die minimale gesamte Oberfläche «σ» des Querschnitts der an jedem Förder montierten Ausgleichssäule oder -säulen (39) im Bereich von S/200 bis S/20 gewählt wird, wo S die gesamte Oberfläche der porösen Wand dieses Förderers ist.

7. Geschlossene Vorrichtung mit potentieller Fluidisierung zum Fördern von pulverigem Aluminiumoxid im dichten Bett nach dem Anspruch 1, dadurch gekennzeichnet, dass die minimale gesamte Oberfläche «σ» des Querschnitts der an jedem Förderer montierten Ausgleichssäule oder -säulen (39) im Bereich von S/100 bis S/50 gewählt wird, wo S die gesamte Oberfläche der porösen Wand dieses Förderers ist.

## Claims

1. A closed apparatus involving potential fluidisation for conveying powder materials in a dense bed from a storage zone (31) to at least one zone (45) to be supplied, formed by a storage device (48) for the powder material, which comprises between said two zones at least one conveyor (33) provided with fluidisation means formed by a lower duct (35) for the circulation of gas, an upper duct (36) for circulation of the powder material and the gas, a porous wall (34) separating said ducts over their entire length, and at least one conduit (38) for supplying gas to the lower duct (35), permitting the establishment of a pressure Pf, the powder material completely filling the upper duct (36) of the conveyor (33) and the upper duct (36) being provided with at least one column (39) referred to as a balancing column, in which the ratio of the minimum area 'σ' of the cross-section to the total area S of the porous wall is at least equal to 1/200, characterised in that the balancing column or columns (39) communicates or communicate freely and directly with the atmosphere, that the lower gas circulation duct (35) is capable of being supplied over its entire length with gas under pressure Pf, and that the closed storage device (48) or 'reserve container', which is provided with means (47) for introducing the powder material and means (51) for taking off the powder material is also provided with at least one conduit (52) which is disposed above the limit level of filling with powder material, in order to establish a pressure equilibrium as between the inside and the outside of said reserve container.

2. A closed apparatus involving potential fluidisation for conveying powder materials in a dense bed according to claim 1, characterised in that the conduit (52) of the closed storage device or reserve container (48) communicates freely with the atmosphere.

3. A closed apparatus involving potential fluidisation for conveying powder materials in a dense bed according to claim 1, characterised in that the conduit (52) is connected to a protected atmosphere, for example to systems for collecting dust-bearing gas or to degassing systems.

4. A closed apparatus involving potential fluidisation for conveying powder materials in a dense bed according to claim 1 characterised in that the balancing column (39) is mounted vertically on the axis of the conveyor.

5. A closed apparatus involving potential fluidisation for conveying powder materials in a dense bed according to claim 1, characterised in that the balancing column (39) is disposed laterally to the conveyor and is connected thereto in the upper part by any suitable means.

6. A closed apparatus involving potential fluidisation for conveying powder materials in a dense bed according to claim 1, characterised in that the total minimum area 'σ' of the section of the balancing column or columns (39) mounted on each conveyor is selected to fall in the range S/200 to S/20 in which S is the total area of the porous wall of said conveyor.

7. A closed apparatus involving potential fluidisation for conveying powder alumina in a dense bed according to claim 1, characterised in that the total minimum area 'σ' of the cross-section of the balancing column or columns (39) mounted on each conveyor is selected to fall in the range of S/100 to S/50 in which S is the total area of the porous wall of said conveyor.